# EUROPEAN PATENT APPLICATION

(11) **EP 1 557 616 A1**
(43) Date of publication of application: **27.07.2005**
(21) Application number: 03809844.8
(22) Date of filing: 03.09.2003
(51) Int. Cl.: F24F 1/00, B01D 53/22

(54) **GAS ENRICHMENT DEVICE AND AIR CONDITIONER**

(30) Priority: 31.10.2002 JP 2002318191; 17.02.2003 JP 2003037883
(71) Applicant: MATSUSHITA ELECTRIC INDUSTRIAL CO., LTD., Kadoma-shi, Osaka 571-8501 (JP)
(72) Inventor: NISHIHARA, Yoshikazu, Koka-gun, Shiga 529-1851 (JP); NAKAMURA, Yasuhiro, Ritto-shi, Shiga 520-3031 (JP); ASADA, Noriya, Kyoto-shi, Kyoto 607-8168 (JP); TAKEUCHI, Atsushi, Otsu-shi, Shiga 520-0024 (JP); SHIMA, Nobuki, Yasu-gun, Shiga 520-2435 (JP); YAMAMURA, Naoto, Hikone-shi, Shiga 521-1141 (JP)
(74) Representative: Grünecker, Kinkeldey, Stockmair & Schwanhäusser
(86) International application number: PCT/JP2003/011240
(87) International publication number: WO 2004/040200

(57) **Abstract**

A gas enrichment apparatus whose differential pressure generating means for generating a differential pressure with gas enrichment means is enhanced in the operational reliability. Thereby, a stable operation of the gas enrichment apparatus is implemented. It includes gas enrichment means and differential pressure generating means for generating a differential pressure with the gas enrichment means; the differential pressure generating means is operated intermittently with the operating rate varied in accordance with the operating time or ambient air temperature, etc.

## Description

### FIELD OF THE INVENTION

The present invention relates to a gas enrichment apparatus for increasing the concentration of a certain specific gas in relation to other gas components in the air, and an air conditioner using the gas enrichment apparatus.

### BACKGROUND OF THE INVENTION

Oxygen enrichment apparatus, nitrogen enrichment apparatus, etc. which increase the concentration of a certain specific gas, e.g. oxygen, nitrogen, in relation to other gas components of the air by means of gas selective permeable membrane, absorbent used in the PSA process or the like, have been in practical use as medical gas enrichment appliance, air conditioners, air purifiers and the like appliances.

Examples of the oxygen enrichment are disclosed in Japanese Patent Laid-Open Application No. H5-113227 and Japanese Patent Laid-Open Application No. 2002-39569; where, oxygen enrichment means is provided in the outdoor unit of a separate type air conditioner, and oxygen-rich air is delivered to the room unit of air conditioner through a delivery tube to be discharged into a room space, or the target of air conditioning, in order to increase the oxygen concentration in the room for the amenity of people there.

The above described conventional technology, however, does not take the influence due to conditions of space where gas enrichment apparatus is installed and ambient temperature of the apparatus and such other elements into consideration. Therefore, if ambient temperature of a differential pressure generating means goes high, temperature of the differential pressure generating means also goes up. As a result, the constituent components of differential pressure generating means, such as resin parts, are ill-affected, and the operating life is deteriorated. This naturally leads to low reliability of the entire apparatus.

The present invention addresses the above problems with the conventional technology, and aims to offer a long-life, high-reliability gas enrichment apparatus and an air conditioner containing the apparatus; where, operation rate of differential pressure generating means is varied in response to such conditions that influence the temperature increase of the differential pressure generating means.

### SUMMARY OF THE INVENTION

A gas enrichment apparatus in the present invention includes at least gas enrichment means, differential pressure generating means for generating a differential pressure with the gas enrichment means, and operating-time detection means for detecting operating time of the differential pressure generating means. The differential pressure generating means is put into an intermittent operation in accordance with the operating time.

Under the above-described configuration, the operation rate of differential pressure generating means is varied responding to such conditions that would increase the temperature of differential pressure generating means. In this way, a long-life, high-reliability gas enrichment apparatus is implemented.

### BRIEF DESCRIPTION OF THE DRAWINGS

FIG. 1 shows front view of a gas enrichment apparatus in accordance with a first exemplary embodiment of the present invention.
FIG. 2 is a perspective view showing an air conditioner containing gas enrichment apparatus.
FIG. 3 is a time chart showing the ON-OFF operation of a decompression pump in gas enrichment apparatus.
FIG. 4 is a time chart used to describe the operation of decompression pump in gas enrichment apparatus in a first exemplary embodiment of the present invention.
FIG. 5 is a control specification of a decompression pump in a second exemplary embodiment of the present invention.
FIG. 6 is a time chart used to describe the operation of decompression pump responding to the outdoor air temperature in second embodiment.
FIG. 7 is a control specification of a decompression pump in a third exemplary embodiment of the present invention.
FIG. 8 is a time chart used to describe the operation of decompression pump responding to the ambient air temperature of decompression pump in the third embodiment.
FIG. 9 is a control specification of a decompression pump in a fourth exemplary embodiment of the present invention.
FIG. 10 is a time chart used to describe the operation of decompression pump responding to the volume of air flow going through oxygen enrichment unit in the fourth embodiment.
FIG. 11 shows front view of a gas enrichment apparatus in accordance with a fifth exemplary embodiment of the present invention.
FIG. 12 is a control specification of a decompression pump in a sixth exemplary embodiment of the present invention.
FIG. 13 is a time chart used to describe the operation of decompression pump responding to compressor temperature in the sixth embodiment.
FIG. 14 is a perspective view of an air conditioner in accordance with a seventh exemplary embodiment of the present invention.
FIG. 15 is a control specification of a decompression pump in the seventh embodiment.
FIG. 16 is a time chart used to describe the operation of decompression pump responding to number of revolutions of outdoor fan in the seventh embodiment.
FIG. 17 is a control specification of a decompression pump in an eighth exemplary embodiment of the present invention.
FIG. 18 is a time chart used to describe the number of revolutions of outdoor fan responding to decompression pump's casing temperature or the ambient temperature the eighth embodiment.

### DETAILED DESCRIPTION OF THE PREFERRED EMBODIMENT

Exemplary embodiments of the present invention are described making reference to the drawings. Where, the gas enrichment apparatus is described using an oxygen enrichment apparatus applied to a separate type air conditioner for air conditioning in a room space.

### (FIRST EMBODIMENT)

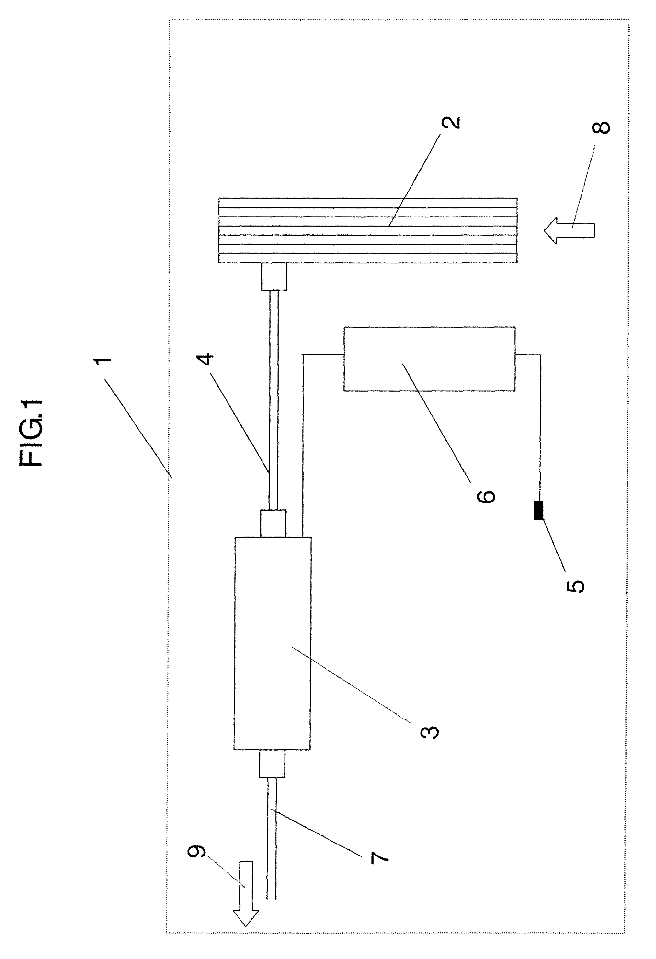

First embodiment of the present invention is described referring to FIG. 1, FIG. 2, FIG. 3 and FIG. 4. FIG. 1 shows front view of a gas enrichment apparatus in accordance with a first exemplary embodiment of the present invention.

Gas enrichment apparatus 1 includes oxygen enrichment unit 2, or gas enrichment means, decompression pump 3, or differential pressure generating means, delivery tube 4, temperature sensor 5, or temperature detection means, control means 6, and main outlet tube 7 connected to decompression pump 3 at the outlet side. Oxygen enrichment unit 1 can be either a selective permeable membrane which selectively permeates a certain specific gas, or a selective absorption film which absorbs a certain specific gas.

In the abave-configured gas enrichment apparatus 1, outdoor air 8 which is the source gas for enrichment is sucked into oxygen enrichment unit 2 by the effect of decompression pump 3 disposed at the exit side of oxygen enrichment unit 2. Oxygen is selectively permeated through a selective permeable membrane, etc. in oxygen enrichment unit 2, and the oxygen enriched gas proceeds to delivery tube 4. Oxygen-rich gas 9 is discharged to main outlet tube 7 to be delivered to a room space, which is the target of air conditioning by the air conditioner.

Temperature sensor 5 detects temperatures of individual constituent items of gas enrichment apparatus 1, the ambient air temperature, etc. Operation of decompression pump 3 is controlled by control means 6 based on the above temperature information. In place of temperature sensor 5, a flow volume sensor, or flow volume detection means, may be provided, and information from the sensor may be used for controlling the operation of decompression pump. Or, control means 6 may be provided with operation time detection means (not shown) for detecting operating time of decompression pump 3, and based on the operating time decompression pump 3 may be controlled to make an intermittent operation. For example, the operation time detection means detects the operating time of decompression pump since the startup, and the pump may be operated intermittently at a regular time interval; or, OFF time of the intermittent operation may be made longer along with the longer operating time. Still other example; interval of intermittent operation after a certain specific operating time since the startup is made to be different from that before the certain specific operating time, and OFF time may be made to be longer than that before the certain specific operating time.

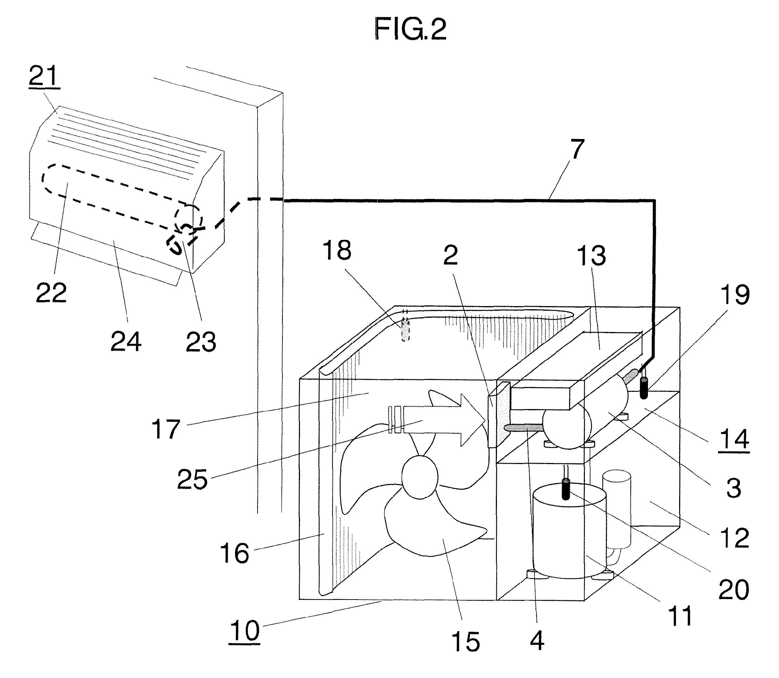

FIG. 2 is a perspective view showing an air conditioner which contains gas enrichment apparatus 1 of FIG. 1. Reference is made to FIG. 2, outdoor unit 10 includes compressor chamber 12 in which compressor 11, four-way valve (not shown), etc. are housed, gas enrichment apparatus 1 consisting of oxygen enrichment unit 2, decompression pump 3, etc., and electrical components chamber 14 in which control unit 13 containing control items of air conditioner and control means 6 for controlling gas enrichment apparatus 1 and other members are housed. Outdoor unit 10 further includes heat exchanger chamber 17 formed of outdoor fan 15 and outdoor heat exchanger 16.

Room unit 21 is provided with room fan 22 and outlet mouth 23 which is connected with main outlet tube 7 of gas enrichment apparatus 1. The oxygen-rich gas is supplied through guide wing 24 into room space which is the target of air harmonization.

It is preferred to provide a fan (not shown) at the primary side (the side of outdoor air) of oxygen enrichment unit 2 in order to blow the nitrogen-rich air staying in the neighborhood away. Operation of the fan may be coupled with operation of gas enrichment apparatus 1. In the present exemplary case, the primary side of oxygen enrichment unit 2 is disposed in the blown air circuit within heat exchanger chamber 17 of outdoor unit 10, so that outdoor fan 15 blows the nitrogen-rich air at the primary side of oxygen enrichment unit 2 away.

Operation of decompression pump 3 of gas enrichment apparatus 1 is controlled by control unit 13. The operation control is performed based on the temperatures detected by outdoor air temperature sensor 18 for detecting ambient air temperature such as the outdoor air temperature of outdoor unit, sensor 19 for detecting the ambient temperature of decompression pump 3, compressor chamber temperature sensor 20, in a case where decompression pump 3 is disposed in the same space as compressor 11, and other sensors, or on a temperature inferred on these actually detected temperatures.

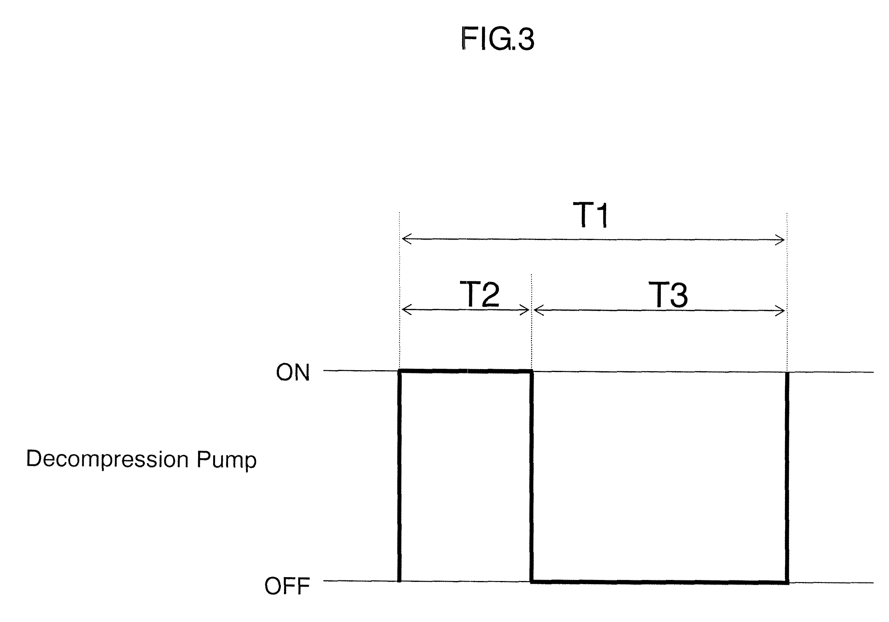

Decompression pump 3 is controlled in terms of operating amount; mostly by varying the operating rate. The operating rate is described using FIG. 3.

FIG. 3 is a time chart showing decompression pump 3 of gas enrichment apparatus 1 operated in ON-OFF mode. The operating rate means proportion of ON time to gross operation time T1 in an intermittent operation of decompression pump 3. Namely, operating rate (%) = (T2 / T1) x 100. For example, operating rate R0 represents the state of continuous ON operation; R1 represents the operating rate ≥ 50%; R2 the operating rate < 50%; R3 the state of continuous OFF.

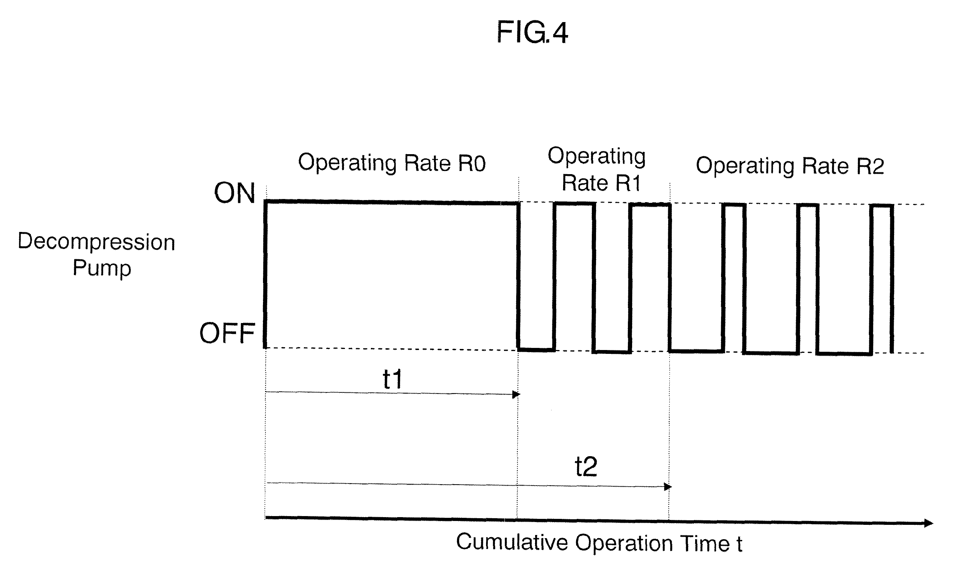

FIG. 4 is a time chart used to describe the operation of decompression pump of gas enrichment apparatus in embodiment 1 of the present invention. As shown in FIG. 4, in the present embodiment 1, operating rate of intermittent operation is varied in accordance with cumulative operation time t after power supply to decompression pump 3 is turned ON. Namely, when power supply is turned on, the operating rate is R0, or continuous ON operation, which is kept until cumulative operation time reaches t1; operating rate is switched to R1 thereafter, which is kept until t2 is reached; thus the ON time of decompression pump 3 is made to be shorter along with the lengthening cumulative operation time.

As described in the above, decompression pump 3 in the present embodiment 1 is put into an intermittent operation after the operation time reached a certain specific time; furthermore, the operating rate of intermittent operation is varied. In this way, temperature rise of decompression pump 3 is suppressed and the reliability is improved, thereby a stable operation of a gas enrichment apparatus can be implemented. Actual values for the operating rate R1 and R2, as well as cumulative operation time t1 and t2 may of course be determined at option.

### (SECOND EMBODIMENT)

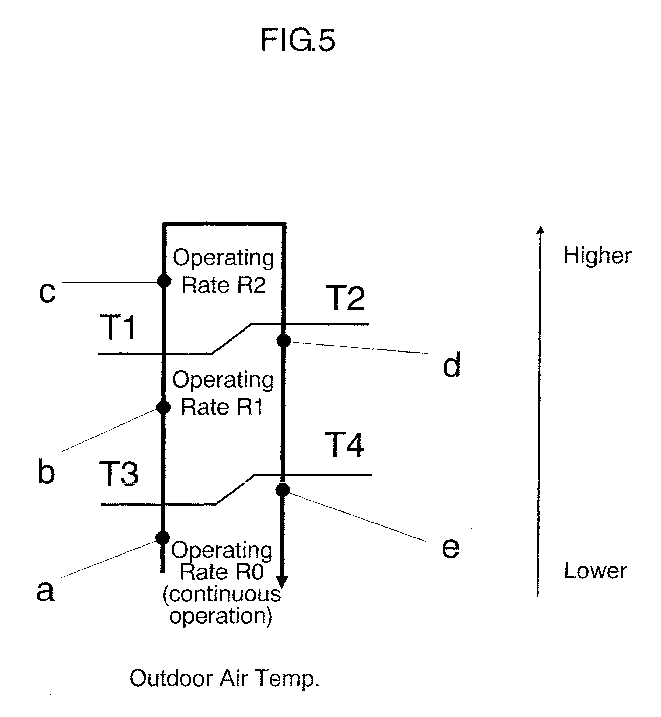

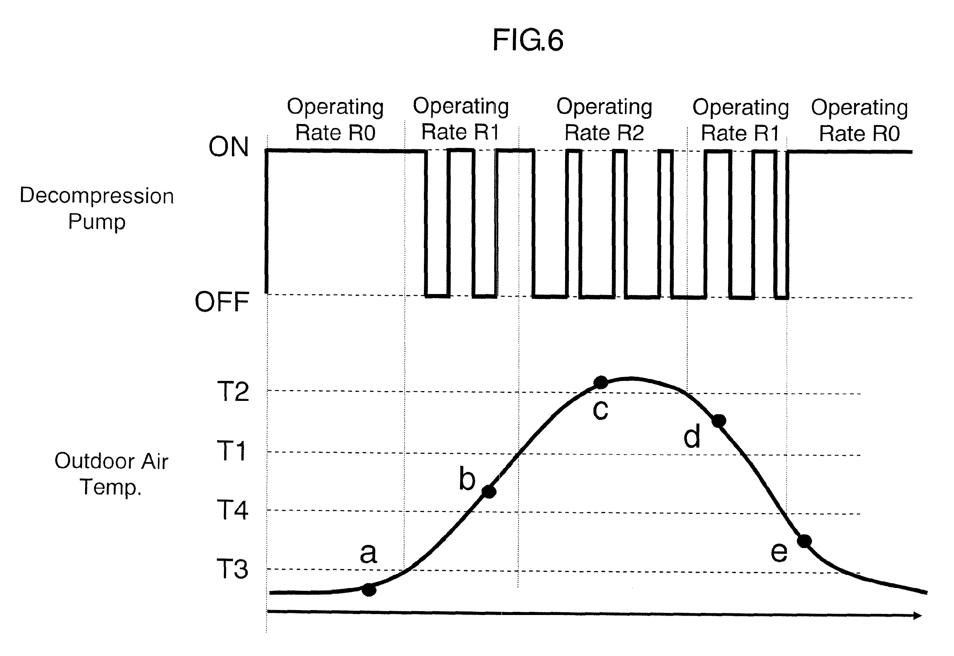

Second embodiment of the present invention is described referring to FIG. 5 and FIG. 6.

FIG. 5 is a control specification of decompression pump in a second exemplary embodiment. FIG. 6 is a time chart used to describe the operation of decompression pump responding to outdoor air temperature in embodiment 2. In FIG. 5 and FIG. 6, the points a - e indicate those points of outdoor air temperatures at which it is operating.

FIG. 5 is a control specification, which shows that operating rate of decompression pump 3 is varied based on temperature information delivered from, for example, outdoor air temperature sensor 18 shown in FIG. 2. The specification shows the operating rates in a scene where the outdoor air temperature ascends and then descends. The specific temperature on the ascending stage at which the operating rate is switched is different from the counterpart temperature on the descending stage. The reason for that is: If it is determined to be T3 = T4, T1 = T2, then switching of operating rate from one rate to other rate would take place frequently at the temperature points. The difference is intended to prevent this to happen.

Now, reference is made to FIG. 6; when outdoor air temperature is lower than T3, decompression pump 3 is operated at operating rate R0; when the temperature goes higher than T3, operation of decompression pump 3 is switched to an intermittent mode, if the temperature goes still higher, the intermittent operation is switched to operating rate R2, in which the ON time of decompression pump 3 is shorter. By controlling the operation of decompression pump 3 in the above-deseribed manner, decompression pump 3's temperature rise caused by difficulty in heat dissipation due to high outdoor air temperature, and by sucking of high temperature air into decompression pump 3 is suppressed for maintaining the operational reliability. In the stage where the outdoor air temperature is descending, the operating rate is gradually increased; at certain specific temperature T4, it is switched to operating rate R0, or continuous operation. By changing the operating rate in this way in accordance with the outdoor air temperature, a stable gas enrichment operation can be implemented without ill-affecting the reliability of decompression pump 3.

Regarding the outdoor air temperature, it is preferred, in view of ensuring the reliability of decompression pump 3, to use the ambient air temperature of oxygen enrichment unit 2, or gas enrichment means. Actual values for the respective operating rates R1 and R2 can be determined beforehand through experiments or other studies, so that temperature of decompression pump 3 stays low enough for maintaining its reliability when it is operated at any of the operating rates.

### (THIRD EMBODIMENT)

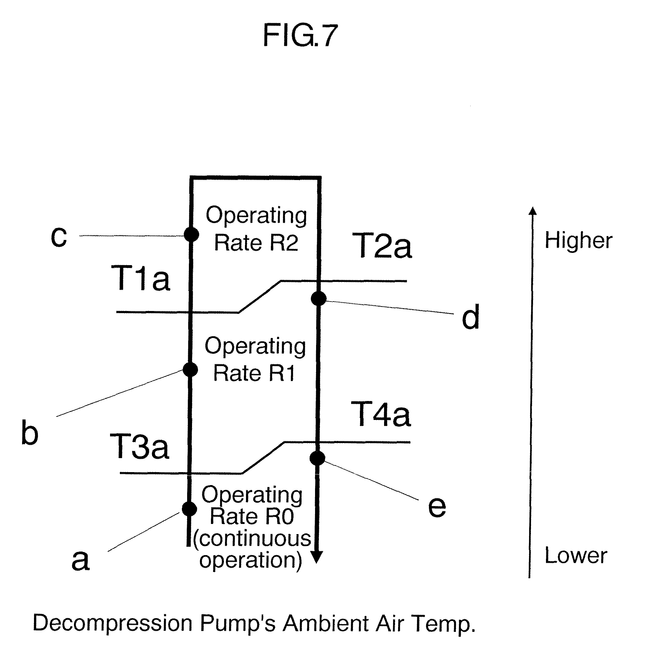

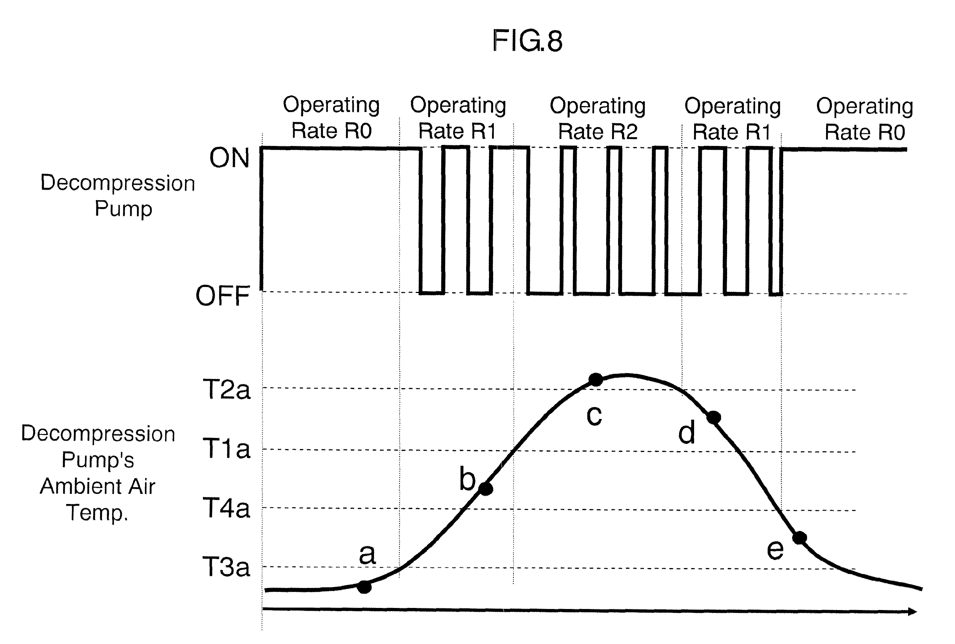

Third embodiment of the present invention is described referring to FIG. 7 and FIG. 8.

FIG. 7 is a control specification of decompression pump in a third exemplary embodiment. FIG. 8 is a time chart used to describe the operation of decompression pump responding to ambient air temperature of decompression pump in embodiment 3. In FIG. 7 and FIG. 8, the points a - e indicate those points of ambient temperatures at which the decompression pump is operating.

FIG. 7 is a control specification, which shows that operating rate of decompression pump 3 is varied based on temperature information delivered from, for example, temperature sensor 19 for detecting ambient temperature of decompression pump 3 shown in FIG. 2. The specification shows the operating rates in a scene where the ambient temperature ascends and then descends. The specific temperature on the ascending stage at which the operating rate is switched is different from the counterpart temperature on the descending stage. The reason for that is: If it is determined to be T3 = T4, T1 = T2, then switching of operating rate from one rate to other rate would take place frequently at the temperature points. The difference is intended to prevent this to happen.

Now, reference is made to FIG. 8; if ambient temperature is lower than T3a, decompression pump 3 is operated at operating rate R0; when the ambient temperature goes higher than T3a, operation of decompression pump 3 is switched to an intermittent mode, if the temperature goes still higher, the intermittent operation is switched to operating rate R2, in which the ON time of decompression pump 3 is shorter. By controlling the operation of decompression pump 3 in the above-described manner, decompression pump 3's temperature rise caused by difficulty in heat dissipation due to high ambient temperature, and by sucking of high temperature gas into decompression pump 3 is suppressed for maintaining the operational reliability. In the stage where the ambient temperature is descending, the operating rate is gradually increased; at certain specific temperature T4a, it is switched to operating rate R0, or continuous operation. By changing the operating rate in this way in accordance with the ambient temperature, a stable gas enrichment operation can be implemented without ill-affecting the reliability of decompression pump 3.

Regarding the ambient temperature, it is preferred, in view of ensuring the reliability of decompression pump 3, to use the temperature of decompression pump 3's casing. Actual values for the respective operating rates R1 and R2 can be determined beforehand through experiments or other studies, so that temperature of decompression pump 3 stays low enough for maintaining its reliability when it is operated at any of the operating rates.

### (FOURTH EMBODIMENT)

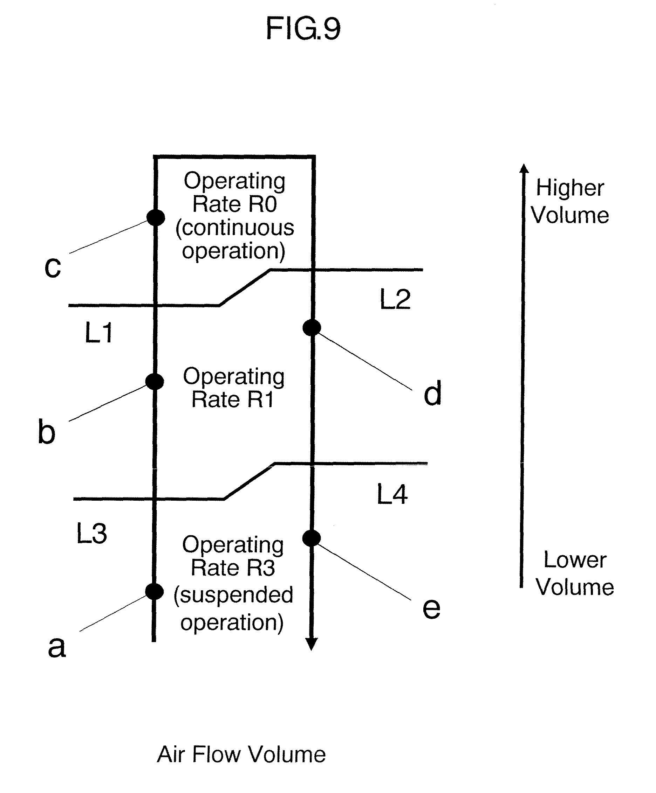

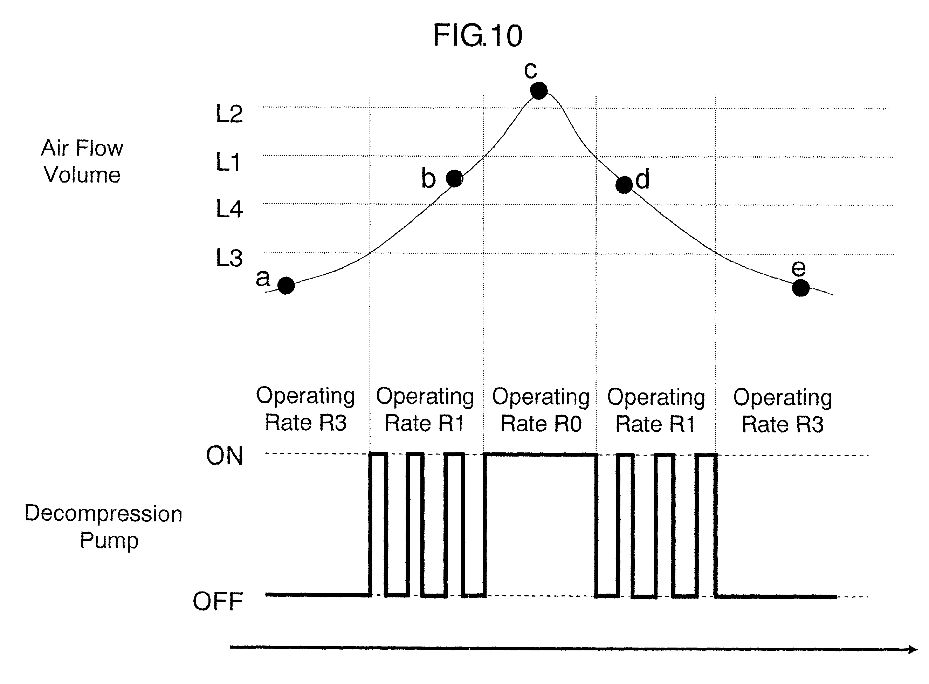

Fourth embodiment of the present invention is described referring to FIG. 9 and FIG. 10. FIG. 9 is a control specification of decompression pump in a fourth exemplary embodiment. FIG. 10 is a time chart used to describe the operation of decompression pump responding to volume of air flow that goes through oxygen enrichment unit in embodiment 4. In FIG. 9 and FIG. 10, the points a - e indicate those points of air flow volume at which it is operating.

FIG. 9 is a control specification, which shows that operating rate of decompression pump 3 is varied based on information about air flow volume delivered from, for example, air flow volume detection means for detecting volume of air 25 flowing into oxygen enrichment unit 2 shown in FIG. 2. The specification shows the operating rates in a scene where the volume of inflow air 25 increases and then decreases. The specific volume on the increasing stage at which the operating rate is switched is different from the counterpart volume on the descending stage. The reason for that is: If it is determined to be L3 = L4, L1 = L2, then switching of operating rate from one rate to other rate would take place frequently at the flow volume points. The difference is intended to prevent this to happen.

Now, reference is made to FIG. 10; when air flow volume is less than L3, operation of decompression pump 3 is suspended; if it goes higher than L3, it is operated at operating rate R1, or an intermittent operation; if the volume increases still higher to exceed L1, it is put into continuous operation, or operating rate R0. Although only one operating rate R1 is shown in FIG. 10 for the intermittent operation, more operating rates may be introduced for intermittent operation.

When the air flow volume into oxygen enrichment unit 2 is small, the load of decompression pump 3 increases. If decompression pump 3 is driven in continuous mode under such condition, the reliability is ill-affected. By driving decompression pump 3 at variable operating rate responding to volume of the inflow air into oxygen enrichment unit 2 in accordance with the present embodiment 4, the reliability of decompression pump 3 can be improved.

For the cases where the volume of inflow air decreases due to clogged oxygen enrichment unit 2, for example, the above-described way of control in accordance with the present embodiment 4 is specifically preferred. As to the method of flow volume detection, it is preferred to detect the difference in the pressure between the entrance side and the exit side of oxygen enrichment unit 2.

Actual values for the respective operating rates R1 and R2 can be determined beforehand through experiments or other studies, so that a sufficient flow volume that is enough to maintain the reliability of decompression pump 3 is ensured at any of the operating rates.

### (FIFTH EMBODIMENT)

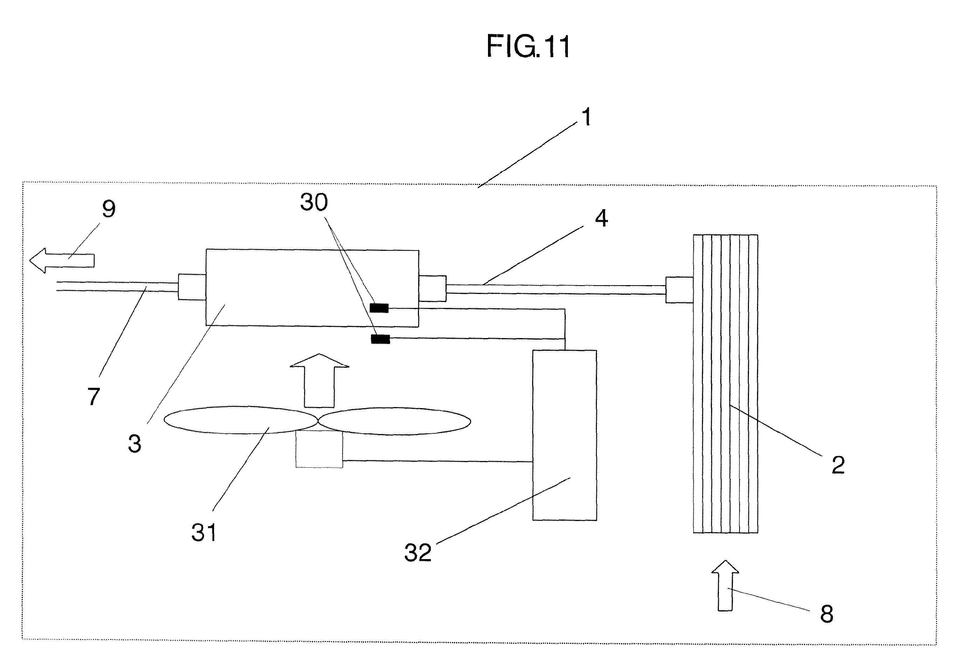

Fifth embodiment of the present invention is described referring to FIG. 11.
FIG. 11 shows front view of a gas enrichment apparatus in a fifth exemplary embodiment.

Basic structure of gas enrichment apparatus 1 shown in FIG. 11 remains the same as that shown in FIG. 1. The apparatus includes temperature sensor 30 for measuring the temperature of decompression pump 3's casing or the ambient, cooling fan 31 provided underneath decompression pump 3, which pump is operated based on the temperature detected by the above temperature sensor, and control unit 32.

In the present embodiment 5, decompression pump 3 is cooled by cooling fan 31 when temperature of the casing or the neighborhood of decompression 3 is high. The reliability of decompression pump 3 is thus improved. A practical example of application of the present invention is described below.

A gas enrichment apparatus mounted on a vehicle; where, gas enrichment apparatus 1 is provided at the windward side of the vehicle. When the vehicle is cruising at a speed faster than a certain level, a substantial volume of the air is taken into oxygen enrichment unit 2 and temperature rise of decompression pump 3 can be suppressed. However, when the cruising speed is lowered, or stopped, temperature of decompression pump 3's casing or the neighborhood is detected. If the detected temperature is higher than a certain specific level, cooling fan 31 is put into operation for forced cooling. Thus, the reliability of decompression pump 3 can be improved.

### (SIXTH EMBODIMENT)

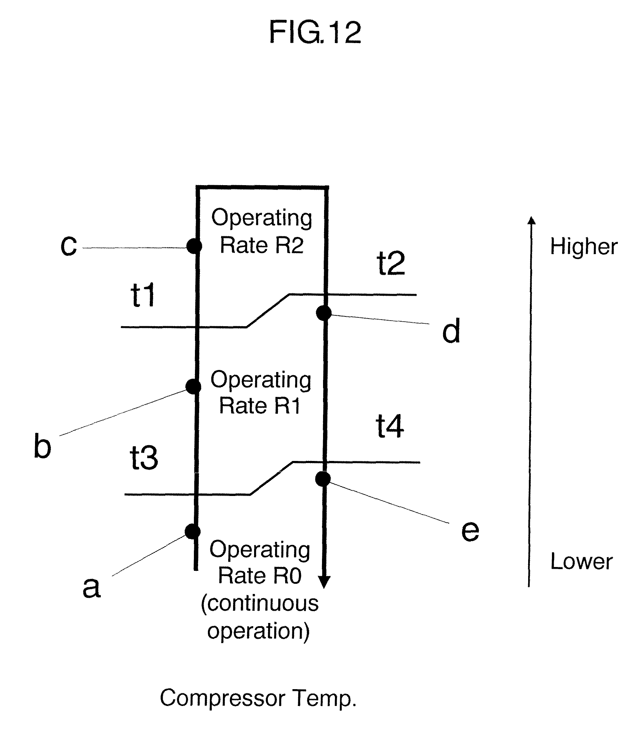

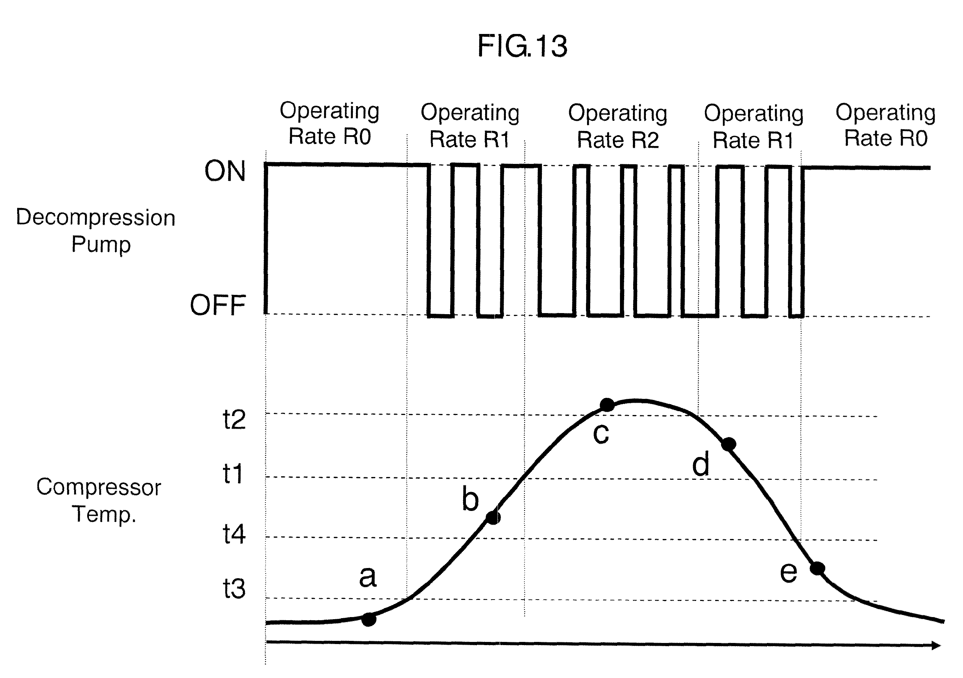

An air conditioner in accordance with a sixth exemplary embodiment of the present invention is described with reference to FIG. 12 and FIG. 13. FIG. 12 is a control specification of decompression pump in embodiment 6. FIG. 13 is a time chart used to describe the operation of decompression pump responding to compressor temperature in embodiment 6. In FIG. 12 and FIG. 13, the points a - e indicate those points of compressor temperatures at which it is operating.

FIG. 12 is a control specification, which shows that the operating rate of decompression pump 3 is varied in accordance with temperature information delivered from, for example, compressor temperature sensor 20 shown in FIG. 2. The specification shows the operating rates in a scene where the compressor temperature increases and then decreases. The compressor temperature on the increasing stage at which the operating rate is switched is different from the counterpart temperature on the descending stage. The reason for that is: If it is determined to be t3 = t4, t1 = t2, then switching of operating rate from one rate to other rate would take place frequently at the temperature points. The difference is intended to prevent this to happen.

Now, reference is made to FIG. 13; when compressor temperature is lower than t3, decompression pump 3 is operated at operating rate R0; if it goes higher than t3, it is operated at operating rate R1; if the ambient temperature of compressor goes still higher, operating rate is shifted to R2 where ON time of decompression pump 3 is shorter. By controlling the operation of decompression pump 3 in the above-described manner, decompression pump 3's temperature rise caused by difficulty in heat dissipation due to high compressor temperature is suppressed for maintaining the operational reliability. In the stage where the ambient temperature is descending, the operating rate is gradually increased; at certain specific temperature T4a, it is switched to operating rate R0, or continuous operation.

As shown in FIG. 2, a major source of heat in outdoor unit 10 of air conditioner is compressor 20. If compressor temperature is high, the ambient temperature of decompression pump 3, which is disposed close to the compressor, also goes high. Therefore, ambient temperature of decompression pump 3 can be inferred from the compressor temperature. Namely, temperature rise at decompression pump 3 can be pre-estimated by measuring the temperature of compressor 11; thereby, operating rate of decompression pump 3 can be shifted in advance for a further improvement in the operational reliability of decompression pump 3.

As for the compressor temperature, compressor 11's casing temperature, temperature of refrigerant outlet tube, temperature of outlet refrigerant, etc. may be used.

### (SEVENTH EMBODIMENT)

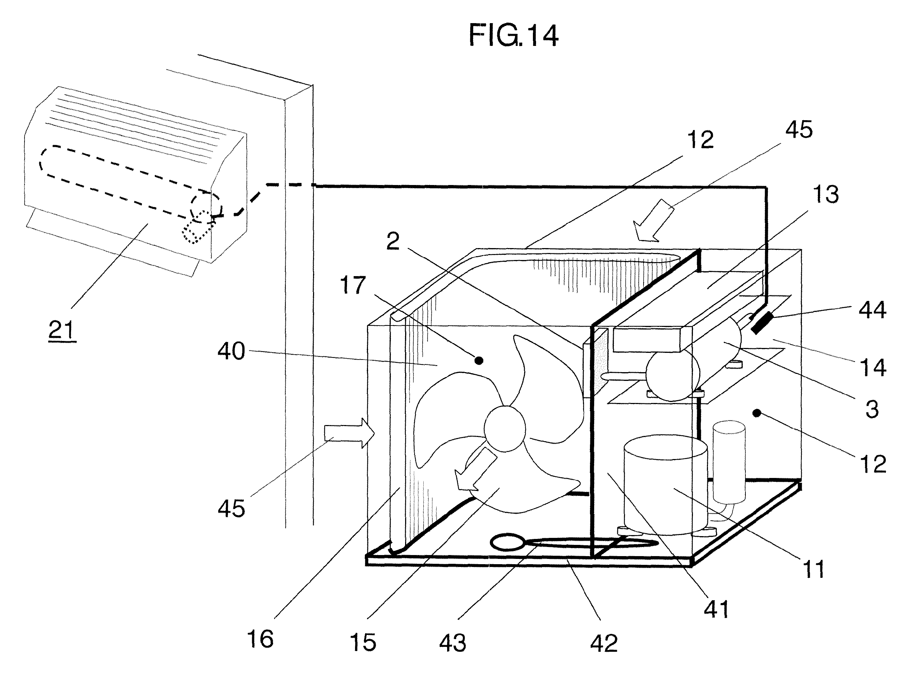

An air conditioner in accordance with seventh exemplary embodiment of the present invention is described with reference to FIG. 14, FIG. 15 and FIG. 16.

FIG. 14 is a perspective view of an air conditioner, whose basic structure remains the same as that of the air conditioner containing gas enrichment apparatus shown in FIG. 2. Outdoor unit 10 includes blown-air circuit 40 formed in heat exchanger chamber 17, which is separated by sound shield board 41 from a machine chamber in which compressor room 12 and electrical components room 14 are housed. Gas enrichment apparatus 1 is mounted in electrical components room 14, and electrical components room 14 is provided with an air path which is coupled with blown-air circuit 40. In blown-air circuit 40, the air sucked by outdoor fan 15 flows through outdoor heat exchanger 16 and proceeds towards the outgoing side of outdoor unit 10. Since there is an air path between blown-air circuit 40 and electrical components room 14 housing decompression pump 3, the air in the space where decompression pump 3 is disposed is sucked towards blown-air circuit 15 upon start of outdoor fan 15; at the same time, the space where decompression pump 3 is disposed is filled with the new air. Namely, operation of outdoor fan 15 generates an air flow within electrical components room 14, where decompression pump 3 is mounted. There is another air path between blown-air circuit 40 and compressor room 12 provided through drain groove 43 which has been formed in base plate 42 of outdoor unit 10. Furthermore, temperature sensor 44 is provided for detecting decompression pump 3's casing temperature or the ambient temperature.

In the above-described configuration, when outdoor fan 15 is put into operation, outdoor air 45 is sucked into blown-air circuit 40 through outdoor heat exchanger 16, at the same time the air in the neighborhood of decompression pump 3's casing is also sucked. In the present embodiment 7, outdoor fan 15 is driven at a speed higher than a certain specified number of revolutions, during decompression pump 3 is at work. Furthermore, the operating amount of decompression pump 3 is controlled in accordance with number of revolutions of outdoor fan 15, and number of revolutions of outdoor fan 15 is controlled based on decompression pump 3's casing temperature or the ambient temperature.

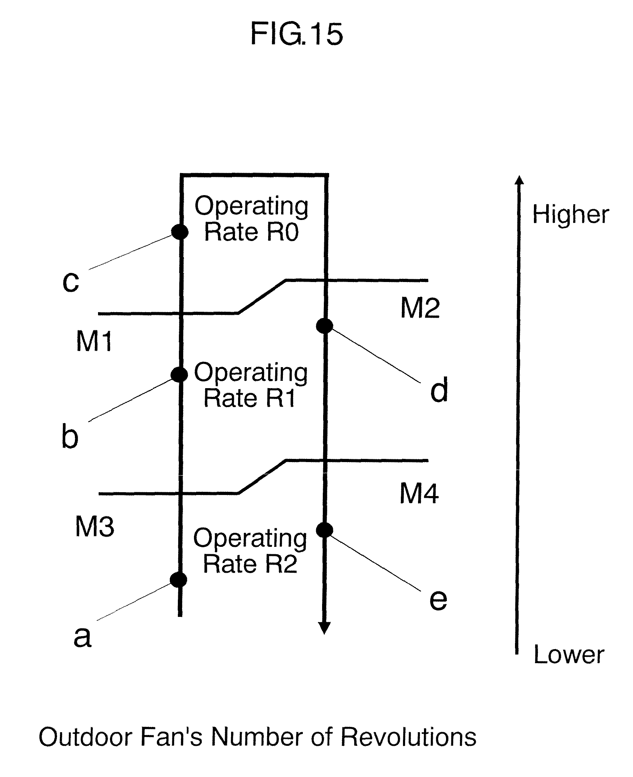

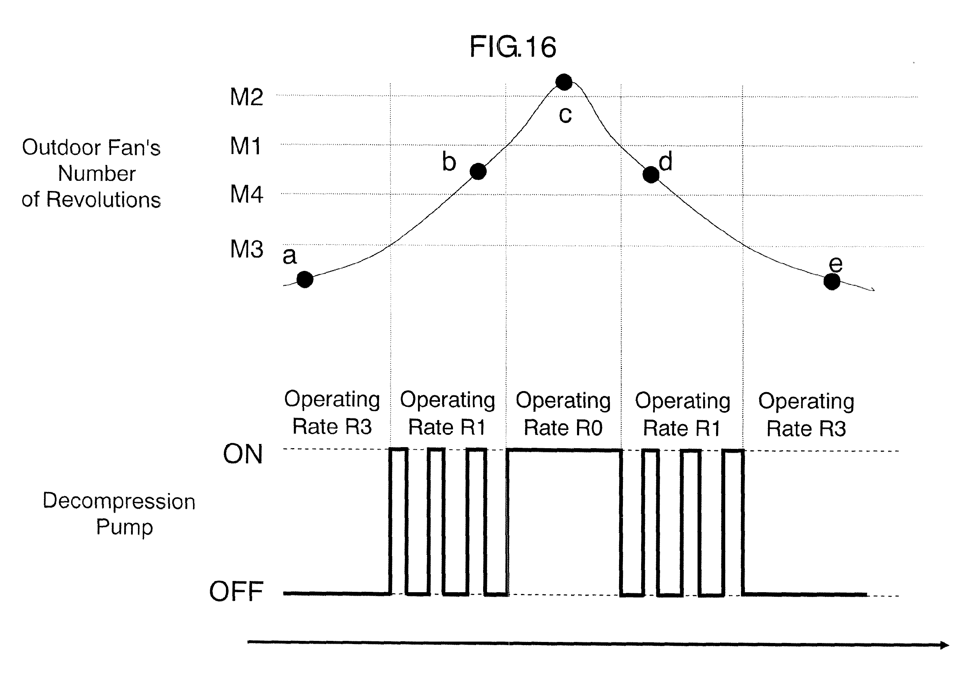

Now, control of decompression pump 3's operating amount in accordance with number of revolutions of outdoor fan 15 is described, referring to FIG. 15 and FIG. 16. FIG. 15 is a control specification of decompression pump in embodiment 7 of the present invention, while FIG. 16 is a time chart used to describe the operation of decompression pump responding to the number of revolutions of outdoor fan in the present embodiment 7. In FIG. 15 and FIG. 16, the points a - e indicate those points of outdoor fan's number of revolutions at which it is operating.

Symbol M represents the number of revolutions of outdoor fan 15; M1, M2, M3 and M4 representing certain predetermined specific numbers of revolutions. The operating amount of decompression pump 3 is defined in terms of the earlier described operating rate; operating rate R0 means continuous operation, R1 an intermittent operation of not less than 50%, R2 an intermittent operation of less than 50%, and R3 the suspended operation.

As shown in FIG. 15 and FIG. 16, when outdoor fan 15's number of revolutions M is higher than M1, operating rate is R0. When the number of revolutions M is lower than M1, control unit 13 compares outdoor fan 15's number of revolutions M to the specific revolution numbers M1, M2, M3 and M4, and the operation is performed as shown in FIG. 16 based on control specification of FIG. 15.

Thus, decompression pump 3 is operated at a high operating rate when outdoor fan 15 is revolving at a high speed and generating a substantial cooling effect onto decompression pump 3; in the opposite state, it is operated at a low operating rate. Thereby, the operating reliability of decompression pump 3 can be improved.

Although different values are given to respective numbers of revolutions M1, M2 and M3, M4 in the present embodiment, the same effects are implemented when the values are M1 = M2, M3 = M4.

### (EIGHTH EMBODIMENT)

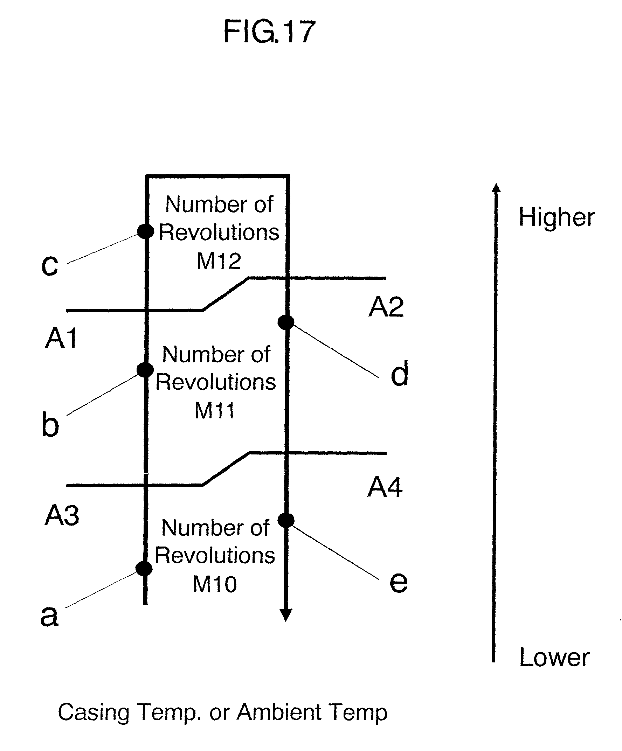

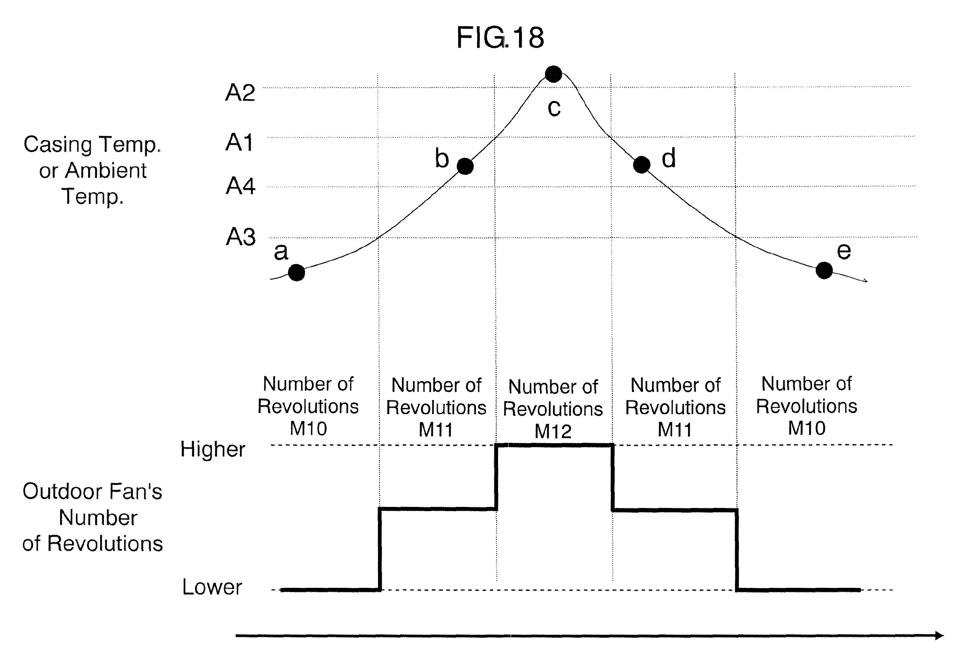

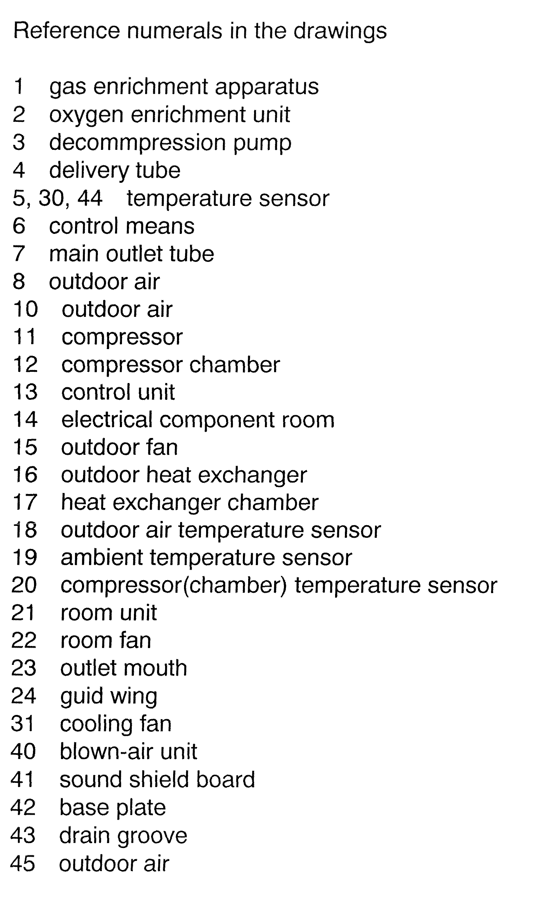

Now, an exemplary case where outdoor fan 15's number of revolutions is controlled in accordance with decompression pump 3's casing temperature or the ambient temperature is described referring to FIG. 17 and FIG. 18. FIG. 17 is a control specification of decompression pump in embodiment 8. FIG. 18 is a time chart used to describe the number of revolutions of outdoor fan 15 responding to casing temperature or the ambient temperature of decompression pump 3 in embodiment 8. In FIG. 17 and FIG. 18, the points a - e indicate those points of casing temperatures or the ambient temperatures at which it is operating.

In FIG. 17, the upper portion designates the higher casing temperature or the ambient temperature, while the lower portion the lower temperature. In the present example, certain predetermined specific temperatures for decompression pump 3's ambient temperature are shown as A1, A2, A3 and A4, while outdoor fan 15's number of revolutions as M10, M11 and M12.

When decompression pump 3's ambient temperature detected by ambient temperature sensor 44 is higher than A1, outdoor fan 15 is operated at number of revolutions M12. If decompression pump 3's ambient temperature is lower than A1, control unit 13 compares the ambient temperature A to A1, A2 and A3, A4, and the operation is performed as shown in FIG. 18 based on control specification of FIG. 17. Namely, when decompression pump 3's ambient temperature is high the number of revolutions is increased; on the other hand, when the ambient temperature is low the number of revolutions is decreased. Thus the operational reliability of decompression pump 3 is improved by controlling volume of the air flow going through the space in which decompression pump 3 is mounted by means of outdoor fan 15.

Although different values are given to respective ambient temperatures A1, A2 and A3, A4 in the present embodiment, the same effects are implemented when the values are A1 = A2, A3 = A4.

### INDUSTRIAL APPLICABILITY

As described in the above, in a gas enrichment apparatus in accordance with the present invention, the operational reliability of decompression pump, which pump being the means for generating a differential pressure for providing an enriched air or other gas, is improved. Thereby, a stable operation of gas enrichment apparatus is implemented. Highly reliable air conditioners, air purifiers can be offered by incorporating the gas enrichment apparatus.

## Claims

1. A gas enrichment apparatus comprising at least
gas enrichment means,
differential pressure generating means for generating a differential pressure with said gas enrichment means, and
operation time detection means for detecting operating time of said differential pressure generating means, wherein
said differential pressure generating means is operated intermittently based on said operating time.

2. The gas enrichment apparatus of claim 1, wherein
operating rate of intermittent operation is variable.

3. The gas enrichment apparatus of claim 1 or claim 2, wherein
said differential pressure generating means is decompression means.

4. A gas enrichment apparatus comprising at least
gas enrichment means,
differential pressure generating means for generating a differential pressure with said gas enrichment means, and
temperature detection means, wherein
operating amount of said differential pressure generating means is controlled based on temperature detected by said temperature detection means.

5. The gas enrichment apparatus of claim 4, wherein
temperature detected by said temperature detection means is the ambient air temperature of said gas enrichment means.

6. The gas enrichment apparatus of claim 4, wherein
temperature detected by said temperature detection means is the ambient air temperature of said differential pressure generating means.

7. The gas enrichment apparatus of claim 4, wherein
temperature detected by said temperature detection means is the temperature of said differential pressure generating means' casing.

8. A gas enrichment apparatus comprising at least
gas enrichment means,
differential pressure generating means for generating a differential pressure with said gas enrichment means, and
flow volume detection means for detecting volume of gas flowing through said gas enrichment means, wherein
operating amount of said differential pressure generating means is controlled in accordance with flow volume detected by said flow volume detection means.

9. The gas enrichment apparatus of claim 8, wherein
when the volume of gas flow detected by said flow volume detection means is lower than a certain predetermined specific value, operating amount of said differential pressure generating means is lowered.

10. The gas enrichment apparatus recited in one of claims 4 through 9, wherein
control of operating amount of said differential pressure generating means is performed in terms of operating rate of intermittent operation with said differential pressure generating means.

11. The gas enrichment apparatus recited in one of claims 4 through 9, wherein
said differential pressure generating means is decompression means.

12. A gas enrichment apparatus comprising at least
gas enrichment means,
decompression means for decompressing said gas enrichment means, temperature detection means for detecting casing temperature or the ambient air temperature of said decompression means, and
cooling means for cooling said decompression means, wherein
said decompression means is cooled by said cooling means based on casing temperature or the ambient air temperature detected by said temperature detection means.

13. An air conditioner containing at least a compressor for compressing a refrigerant and discharging it, and a refrigeration cycle, comprising
gas enrichment means,
differential pressure generating means for generating a differential pressure with said gas enrichment means, and
temperature detection means for detecting said compressor's casing temperature or temperature of discharging refrigerant, wherein
operating amount of said differential pressure generating means is controlled based on said casing temperature or said refrigerant temperature detected by said temperature detection means.

14. The air conditioner of claim 13, wherein
operating amount of said differential pressure generating means is controlled in terms of operating rate of intermittent operation with said differential pressure generating means.

15. An air conditioner containing at least an outdoor fan for breathing the outdoor air, comprising
gas enrichment means,
differential pressure generating means for generating a differential pressure with said gas enrichment means, and
an air path which allows wind generated by revolution of said outdoor fan to go through between the space in which said differential pressure generating means is mounted and said outdoor fan, wherein
said outdoor fan is driven at a revolving speed higher than a certain predetermined specific number of revolutions during said differential pressure generating means is at work.

16. The air conditioner of claim 15 comprising temperature detection means for detecting casing temperature or the ambient temperature of said differential pressure generating means, wherein
number of revolutions of said outdoor fan is controlled based on said casing temperature or the ambient temperature.

17. An air conditioner containing at least an outdoor fan for inhalation the outdoor air, comprising
gas enrichment means,
differential pressure generating means for generating a differential pressure with said gas enrichment means, and
an air path which allows wind generated by revolution of said outdoor fan to go through between the space in which said differential pressure generating means is mounted and said outdoor fan, wherein
operation amount of said differential pressure generating means is controlled in accordance with number of revolutions of said outdoor fan.

18. The air conditioner of claim 17, wherein
operating amount of said differential pressure generating means is controlled in terms of operating rate of intermittent operation with said differential pressure generating means.

19. The air conditioner recited in one of claims 13 through 18, wherein
said differential pressure generating means is decompression means.
